# EUROPEAN PATENT SPECIFICATION

(11) **EP 1 025 135 B1**
(45) Date of publication and mention of the grant of the patent: **29.09.2004**
(21) Application number: 98949162.6
(22) Date of filing: 23.10.1998
(51) Int. Cl.: C08F 8/00

(54) **METHOD OF PREPARATION OF PRODUCTS WHICH ABSORB WATER INTRAMOLECULARLY**
VERFAHREN ZUR HERSTELLUNG VON INTRAMOLEKULAR-WASSERABSORBIERENDEN PRODUKTEN
PROCEDE DE PREPARATION DE PRODUITS ABSORBANT L'EAU PAR INTRAMOLECULARITE

(30) Priority: 23.10.1997 GR 97100403
(43) Date of publication of application: 09.08.2000
(73) Proprietor: Innoval Management Limited, Curaçao, Netherlands Antilles (AN)
(72) Inventor: VALKANAS, George, N., GR- 151 32 Maroussi (GR)
(74) Representative: Kilimiris, Tassos-Anastase
(86) International application number: PCT/GR1998/000027
(87) International publication number: WO 1999/021897

(56) References cited:
- EP-A- 0 002 346
- EP-A- 0 497 056
- FR-A- 2 354 348
- GB-A- 1 132 116
- US-A- 3 972 840
- US-A- 4 177 331
- US-A- 4 412 028

## Description

### Subject of the Invention

The invention refers to a method for the preparation of products which are defined by a polymer of a macroreticular structure which includes ionic groups at a large density and from which products are derived which absorb intramolecularly, i.e inside their molecules, large quantities of water, up to 300 times their weight and which exhibit a high ability in the ground to promote soil fertility and cover water consumption needs, offering a reduction of water consumption of up to 12 times.

### Objective of the Invention

Saving in water consumption is at present a principal subject of global importance , whereas the phenomenon of desertification that has arisen in several areas of the planet constitutes a primary source of global concern associated with the survival of the planet. Agriculture production in synchronisation with the needs of the over-populated planet in what concerns the satisfaction of food demand, whereas the so-called green revolution has several weaknesses, leads to enforcement of nature and to soil erosion. The principal cause for all that is covering the needs of water, in a manner that serves but does not erode nature.

This problem is severely aggravated at present, as the water balance is broken, the sea starts covering large areas of shores reducing the availability of fertile land and leading to a new geographical status of equilibrium between the sea and the land. It is hence a primary need to introduce new principles in water usage leading to water saving associated both with human consumption as well as with the use of water for agricultural needs, and where solutions which offer maximum economy in water usage must be introduced.

### Development of the Invention

The invention describes products which cover the needs of soil in water leading to water saving in the earth, the nature and the agriculture, thus the invention relates to water economy in these uses.

The products of the invention are stable macroreticular polymer products capable of absorbing intramolecularly, i.e. inside their molecules, about 100 to 300 times their weight of water. In accordance with the invention, these products are prepared by
(i) subjecting a polymer having aromatic groups, in form of a 10-30% solution in chlorinated solvent(s), to a crosslinking reaction with 2,5-dichloromethyl-1,4-dimethylbenzene, to obtain an insoluble macroreticular gel;
(ii) extruding and cutting said insoluble macroreticular gel to obtain discrete macroreticular gel particles of a dimension of 3 to 5 centimeters;
(iii) reacting said macroreticular gel particles, suspended in chlorinated solvent(s), with sulfonating and, optionally, nitrating agents to obtain highly anionic gel particles; and
(iv) subjecting said highly anionic macroreticular gel particles to a work-up procedure.

The following can be used as polymers having aromatic groups: Polystyrene, hydrogenated styrene butadiene rubber (SBR), styrene-acrylonitrile and copolymers thereof.

The crosslinking of the polymer with 2,5-dichloromethyl-1,4-dimethylbenzene in a 10-30% solution in chlorinated solvent(s) can be carried out in a temperature ranging from about room temperature to about 50°C, optionally using, as catalysts, sulfuric acid, SbCl₅ and/or TiCl₄, in catalytic amounts. Alternatively, the crosslinking may also be carried out in the absence of a solvent in a melt of said polymer.

The macroreticular polymers as produced in the form of a gel are practically insoluble and must be subjected to processing for the introduction of the ionic groups and for this reason, the macroreticular polymers are subjected to a suitable shaping in a cutting equipment where the gel formed is entered in an array of tubes of a length of one meter and of diameter of two to four centimetres where the gel is cut longitudinally and at its end transversely in three to four centimetre pieces so that discrete particles of dimensions of three by four centimetres are produced. In this form the material prepared suspended in the solvent is subsequently subjected to a sulfonation for the introduction of high density sulfonic groups.

Strong sulfonating agents are used for the introduction of sulfonic groups to the suspension of the polymer, such as chlorosulfonic acid, sulfur trioxide or oleum sulfuric acid, each in a molar ratio of equivalent sulfur trioxide of 1.5-2 mol per mol of aromatic groups contained in said insoluble macroreticular gel particles. Sulfonation is fast and efficient, as also is the introduction of nitric groups when a nitrating agent, e.g. nitration acid, is present. In the case that the polymer comprises styrene-acrylonitrile copolymer(s), then carboxylic groups are formed as additional anionic groups, from the hydrolysis of the cyano groups in the sulfonation reaction conditions.

The reaction with the sulfonating agent(s) produces further crosslinking of the macroreticular gel particles through formation of sulfone bridges. This further crosslinking can be controlled with the addition of acetic acid as a crosslinking inhibitor in a proportion of 10-15% in the solution.

The work-up procedure comprises removing the product; decanting the solvent and washing it with ethanol or propanol; neutralising the product in about 30% aqueous sodium or potassium hydroxide, whereby it absorbs water to a degree of 30-50 time its weight; shrinking/dehydrating the product in 15-25% aqueous sodium chloride to a water content of about 10%; and heating it under vacuum in a temperature up to about 160°C. Alternatively, said shrinking/dehydrating can be carried out by subjecting the product to an electric field of 20V.

The product thus obtained is fully dehydrated and freed from solvent, so that it becomes a marketable product able to absorb water up to 150-300 times its weight. It has the form of small spheres or leaves depending on the cutting process in the extruder

The process of the invention produces materials which absorb water intramolecularly and promote fertility to the ground. These products have been studied in terms of activity and the following have been observed:
a) With the addition of these products to the soil, the growth of trees and forests is possible with full survival and acceleration of growth as water economy in the order of 12 is achieved sufficient for 120 days of biological activity
b) The growth of fruit bearing trees is promoted with an acceleration of growth in the order of 30 to 40% , a biomass production increase of 30 to 50% and a doubling of fruit production
c) Soil fertility is promoted in problematic ,sterile and mountain areas as these materials offer water economy to the ground ,and help the growth of green and the development of soil biological activity

These materials which contain water intramolecularly which does not evaporate nor is leaked in the ground but kept as in a tank for covering the water needs of plants and of trees, consist of inorganic material to the extent of 72 to 75% where the polymer is only the shell and accounts for only 25-28% by weight. Thus, these materials have maximum stability in soil where they do not degrade biologically and nor are they altered in terms of composition. Thus the products of the invention can operate for indefinite long period of time by absorbing/delivering water in the soil.

As a consequence, the products of the invention analysed and described above constitute means of the highest value and utility in maintaining the natural operation, the promotion of natural growth and the production of food production in a sustained manner as they promote soil fertility independently of the quality of the soil and in every soil under any conditions.

### Example No 1

### a. Preparation of the crosslinking agent

The mixture of reactants for the preparation of the crosslinking agent 2,5-dichloromethyl -1,4-dimethylbenzene , are : 246.2 ml of o-xylene , 2370 ml of a 37% formaldeyde solution in a 5 litres of hydrochloric acid solution 35% ( Molar ratio 1:6;12).The mixture is brought to a 10 litres glass reactor heated to 95°C and stirred for 5 hours ; it then remains at normal temperature for 12 hours forming crystals of the crosslinking agent which is collected by filtration (205 grams) Furthermore 400 ml of hydrogen chloride are added to the solution. Following heating under stirring for 5 hours and then cooling a new quantity of the crosslinking agent settles (152 grams) with 91% yield

The product is then recrystallised in alcohol and forms a pure product with a melting point of 125°C

### b. Preparation of the macroreticular gel

In a pilot unit featuring a 200 litres dissolution tank a 2 k.m. sulphonation reactor and other parts which will be described in the following, 30 kg of polystyrene solution in 100 litres of chlorinated solvent is formed : 300 gram of crosslinking agent are added to the solution under stirring conditions. followed by a dense sulphuric acid catalyst until a grit is formed (5 cm of catalyst 20 minutes resistance time) the macroreticular gel formed is extracted and cut into 4-5 cm pieces

### Example No 2

In the pilot plant of example No 1, 20kgs of polystyrene solution is formed in 100 litres of solvent ; to this 200 grams of crosslinking agent are added and then sulphuric acid as catalyst until a grit is formed (6 ml, 24 minutes) The mixture is transferred to the extruder before the formation of the gel,the extruder being defined by a system of 3 cm 1 meter long tubes featuring a space for the draining of the mixture. The solution is converted to macroreticular and then compressed in the tube system towards the outlet where a cutting system operates for forming 3-5 cm pieces.

The small particles and the solvent are brought to the sulphonation reactor where 65% oleum sulphuric acid is added as a 30% solution in the chlorinated solvent at quantity so that the sulphur trioxide to contain 2.2 Moles/Mole of benzene units. The stirring lasts for 2 hours following the end of sulphonation and in the sequel the product is extracted and brought to a perforated container for straining of the solvent. In the sequel it is passed with the perforated container to be washed with propanol to extract the unreacted chlorosulphonic acid and then is brought to a neutralisation tank with 30% potassium hydroxide; then is immersed in 20 % sodium chloride for shrinkage and it is passed with water content of 12% to a container for heating to 160°C with stirring and under vacuum, following which 80 kgs of product are obtained in the form of irregular small spheres; in technical terms it is a light product with a degree of inflation in water in the order of 225 and with a composition of 75% inorganic and 25% organic, with a practical yield of 100% .

### Example No 3

20 g of the 50-50% styrene -acrylonitrile copolymer are dissolved in the solution reactor in 100 litres of pure 1,2 dichloroethane, 100 grams of the crosslinking agent are added to the solution and then sulphuric acid is also added until a grit is formed. The mixture is brought to an extruder where a gel is formed and with the exertion of pressure it is promoted to the tubes so that the material is cut into 4 to 5 centimetre pieces.

The pieces and the solvent are brought to the sulphonation reactor where 65% of oleum sulphuric acid as a 25% solution and at a quantity of 2 Moles/Mole of benzene nuclei Following a reaction and stirring for 5 hours the product is removed, strained, neutratised and passed to a 20 V electric field and finally with a 5% water content it is heated at 160°C with stirring and with the application of vacuum and is converted into a high specification product with a degree of inflation in water of 185. This product has two ionic groups, a sulphonic one and a carboxylic one from the hydrolysis of acrylonitrile

### Example No 4

20 g of fully hydrogenated SBR (styrene 40%) are brought to a reactor in 100 litres of 1,2 dichloroethane, Following dissolution, 80 g of crosslinking agent are added and with the addition of sulphuric acid as a catalyst , the mixture is passed to the extruder where it is transformed to a macroreticular material. The 4 to 5 centimetre pieces finally produced and the solvent are brought to the sulphonation reactor where 65% oleum sulphuric acid is added as a 25% solution in a quantity of 2 Mole SO3 per Mol of benzene nuclei. Following reaction and stirring for four hours, the product is removed, strained, neutralised and shrunk in a 20 V electric field and following heating at 160°C under stirring and vacuum a high specification product is obtained with an inflatability ratio of 120.

## Claims

1. Method for the preparation of a particulate, stable macroreticular polymer product capable of intramolecularly absorbing about 100 to 300 times its weight of water, said method comprising the steps of
(i) subjecting a polymer having aromatic groups, in form of a 10-30% solution in chlorinated solvent(s), to a crosslinking reaction with 2,5-dichloromethyl-1,4-dimethylbenzene, to obtain an insoluble macroreticular gel;
(ii) extruding and cutting said insoluble macroreticular gel to obtain discrete macroreticular gel particles of a dimension of 3 to 5 centimeters;
(iii) reacting said macroreticular gel particles, suspended in chlorinated solvent(s), with sulfonating and, optionally, nitrating agents to obtain highly anionic gel particles; and
(iv) subjecting said highly anionic macroreticular gel particles to a work-up procedure.

2. Method according to claim 1, wherein said work-up procedure in (iv) comprises removing the product, decanting the solvent and washing it with ethanol or propanol, neutralising the product in about 30% aqueous sodium or potassium hydroxide, shrinking/dehydrating it in 15-25% aqueous sodium chloride to a water content of about 10%, and heating it under vacuum in a temperature up to about 160°C.

3. Method according to claim 2, but wherein said shrinking/dehydrating is carried out by subjecting said highly anionic macroreticular gel particles to an electric field of 20V.

4. Method according to claim 1, wherein said polymer having aromatic groups is selected from the group comprising polystyrene, hydrogenated styrene butadiene rubber (SBR), styrene-acrylonitrile and copolymers thereof.

5. Method according to claim 1, but wherein said crosslinking reaction in (i) is carried out in a melt of said polymer.

6. Method according to claim 1, wherein said reaction in (i) is carried out in a temperature ranging from about room temperature to about 50°C and optionally using, as catalysts, 1-5% sulfuric acid, SbCl₅ and/or TiCl₄, in catalytic amounts.

7. Method according to claim 1, wherein said sulfonating agents(s) are selected from chlorosulfonic acid, sulfur trioxide or oleum sulfuric acid, each in a molar ratio of equivalent sulfur trioxide of 1.5-2 mol per mol of aromatic groups contained in said insoluble macroreticular gel particles and any nitrating agent is nitration acid.

8. Method according to claim 7, wherein said reaction with sulfonating agent(s) produces further crosslinking of said macroreticular gel particles through the formation of sulfone bridges, said further crosslinking being controlled with the addition of acetic acid as a crosslinking inhibitor in a proportion of 10-15% in the solution.

9. Method according to claims 4 and 7, wherein in the case that said polymer having aromatic groups comprises styrene-acrylonitrile copolymer(s), then carboxylic groups are formed as additional anionic groups, from the hydrolysis of the cyano groups in the sulfonation reaction conditions.

10. Method according to claim 1, wherein said extrusion is carried out by pressing said macroreticular gel through an extruder comprising an array of parallel tubes of length of about 1 meter and diameter of about 2 to 4 centimeters and a cutting system at one end of the tubes, to form said particles.

11. A stable product obtained according to any of the preceding claims, which is mixed with a soil to act constantly as humidity regulator and fertility promoter thereof.

## Patentansprüche

1. Verfahren zur Herstellung eines partikulären, stabilen makroretikulären Polymerprodukts, das in der Lage ist, intramolekular das etwa 100 bis 300-fache seines Gewichts an Wasser zu absorbieren, wobei das Verfahren die folgenden Schritte umfasst:
(i) Unterziehen eines Polymers mit aromatischen Resten in Form einer 10 bis 30 %-igen Lösung in chloriniertem/chlorinierten Lösungsmittel/Lösungsmitteln gegenüber einer Vernetzungsreaktion mit 2,5-Dichlormethyl-1,4-dimethylbenzol, um ein unlösliches makroretikuläres Gel zu erhalten;
(ii) Extrudieren und Schneiden des unlöslichen makroretikulären Gels, um separate makroretikuläre Gelteilchen mit einer Dimension von 3 bis 5 Zentimetern zu erhalten;
(iii) Umsetzen der makroretikulären Gelteilchen, die in chloriniertem/chlorinierten Lösungsmittel/Lösungsmitteln suspendiert sind, mit Sulfonierungs- und gegebenenfalls Nitrierungsmitteln, um stark anionische Gelteilchen zu erhalten; und
(iv) Durchführen eines Aufarbeitungsverfahrens mit den stark anionischen makroretikulären Gelteilchen.

2. Verfahren nach Anspruch 1, wobei das Aufarbeitungsverfahren in (iv) Entfernen des Produkts, Dekantieren des Lösungsmittels und dessen Waschen mit Ethanol oder Propanol, Neutralisieren des Produkts in etwa 30 %-igem wässrigem Natrium- oder Kaliumhydroxid, dessen Einengen/Dehydratisieren in 15 bis 25 %-igem wässrigen Natriumchlorid auf einen Wassergehalt von etwa 10 % und dessen Erhitzen unter Vakuum bei einer Temperatur bis zu etwa 160°C umfasst.

3. Verfahren nach Anspruch 2, wobei jedoch das Einengen/Dehydratisieren durchgeführt wird, indem die stark anionischen makroretikulären Gelteilchen einem elektrischen Feld von 20 V ausgesetzt werden.

4. Verfahren nach Anspruch 1, wobei das Polymer mit aromatischen Resten aus Polystyrol, hydriertem Styrol-Butadien-Kautschuk (SBR), Styrol-Acrylnitril und Copolymeren davon ausgewählt ist.

5. Verfahren nach Anspruch 1, wobei die Vernetzungsreaktion jedoch in (i) in einer Schmelze des Polymers durchgeführt wird.

6. Verfahren nach Anspruch 1, wobei die Reaktion in (i) bei einer Temperatur im Bereich von etwa Raumtemperatur bis etwa 50°C und gegebenenfalls unter Verwendung von katalytischen Mengen von 1 bis 5 %-iger Schwefelsäure, SbCI₅ und/oder TiCI₄ als Katalysatoren durchgeführt wird.

7. Verfahren nach Anspruch 1, wobei das/die Sulfonierungsmittel aus Chlorsulfonsäure, Schwefeltrioxid oder rauchender Schwefelsäure, jede in einem molaren Verhältnis von 1,5 bis 2 mol Schwefeltrioxidäquivalenten pro mol aromatischer Reste, die in den unlöslichen makroretikulären Gelteilchen enthalten sind, ausgewählt sind, und wobei jedes Nitrierungsmittel Nitriersäure ist.

8. Verfahren nach Anspruch 7, wobei die Reaktion mit Sulfonierungsmittel(n) weiteres Vernetzen der makroretikulären Gelteilchen durch die Bildung von Sulfonbrücken bewirkt, wobei das weitere Vernetzen durch die Zugabe von Essigsäure als ein Vernetzungsinhibitor in einem Verhältnis von 10 bis 15 % in der Lösung kontrolliert wird.

9. Verfahren nach den Ansprüchen 4 und 7, wobei in dem Fall, dass das Polymer mit aromatischen Resten Styrol-Acrylnitril-Copolymer(e) umfasst, Carbonsäuregruppen als zusätzliche anionische Reste durch die Hydrolyse der Cyanogruppen unter den Bedingungen der Sulfonierungsreaktion gebildet werden.

10. Verfahren nach Anspruch 1, wobei die Extrusion durch Pressen des makroretikulären Gels durch einen Extruder, umfassend eine Anordnung von parallelen Röhren einer Länge von etwa 1 Meter und einem Durchmesser von etwa 2 bis 4 Zentimetern und ein Schneidesystem an einem Ende der Röhren, durchgeführt wird, um die Teilchen zu bilden.

11. Stabiles Produkt, das nach einem der vorstehenden Ansprüche erhalten wurde und das mit Erde gemischt ist, um stetig als Feuchtigkeitsregulator und Fruchtbarkeitsförderer dafür zu wirken.

## Revendications

1. Procédé pour la préparation d'un produit polymérique macroréticulaire particulaire, stable capable d'absorber de manière intramoléculaire environ 100 à 300 fois son poids en eau, le procédé comprenant les étapes consistant à :
(i) soumettre un polymère ayant des groupes aromatiques, sous forme d'une solution à 10-30% dans un ou des solvants chloré(s), à une réaction de réticulation avec le 2,5-dichlorométhyl-1,4-diméthylbenzène, pour obtenir un gel macroréticulaire insoluble ;
(ü) extruder et couper ledit gel macroréticulaire insoluble pour obtenir des particules séparées de gel macroréticulaire d'une dimension de 3 à 5 centimètres ;
(iii) faire réagir lesdites particules de gel macroréticulaire, mises en suspension dans un ou des solvants chloré(s), avec des agents de sulfonation et, éventuellement, de nitration, pour obtenir des particules de gel fortement anioniques ; et
(iv) soumettre lesdites particules de gel macroréticulaire fortement anioniques à une procédure de finition.

2. Procédé selon la revendication 1, dans lequel ladite procédure de finition en (iv) comprend la récupération du produit, la décantation du solvant et son lavage avec de l'éthanol ou du propanol, la neutralisation du produit dans de l'hydroxyde de sodium ou de potassium aqueux à environ 30%, son rétrécissement / déshydratation dans du chlorure de sodium aqueux à 15-25% jusqu'à une teneur en eau de 10% environ, et son chauffage sous vide à une température jusqu'à environ 160°C.

3. Procédé selon la revendication 2, mais dans lequel ledit rétrécissement / déshydratation est réalisée en soumettant lesdites particules de gel macroréticulaire fortement anionique à un champ électrique de 20V.

4. Procédé selon la revendication 1, dans lequel ledit polymère ayant des groupes aromatiques est choisi dans le groupe comprenant le polystyrène, le caoutchouc de butadiène styrène hydrogéné (SBR), le styrène-acrylonitrile et des copolymères de ceux-ci.

5. Procédé selon la revendication 1, mais dans lequel ladite réaction de réticulation en (i) est réalisée en présence dudit polymère en fusion.

6. Procédé selon la revendication 1, dans lequel ladite réaction en (i) est réalisée à une température comprise entre environ la température ambiante et environ 50°C, et éventuellement en utilisant, comme catalyseurs, des quantités catalytiques d'acide sulfurique à 1-5%, de SbCl₅ et/ou de TiCl₄.

7. Procédé selon la revendication 1, dans lequel le ou les agents de sulfonation sont choisis parmi l'acide chlorosulfonique, le trioxyde de soufre ou l'acide sulfurique huileux, chacun dans un rapport molaire d'équivalent de trioxyde de soufre de 1,5-2 mole par mole de groupes aromatiques contenus dans lesdites particules de gel macroréticulaire insoluble, tout agent de nitration est un acide de nitration.

8. Procédé selon la revendication 7, dans lequel ladite réaction avec un ou des agents de sulfonation produit une réticulation supplémentaire desdites particules de gel macroréticulaire, par formation de ponts sulfones, ladite réticulation supplémentaire étant contrôlée par l'ajout d'acide acétique en tant qu'inhibiteur de réticulation en une proportion de 10-15% dans la solution.

9. Procédé selon les revendications 4 et 7, dans lequel au cas où ledit polymère ayant des groupes aromatiques comprend un ou des copolymères styrène-acrylonitrile, alors des groupes carboxyliques sont formés en tant que groupes anioniques supplémentaires, à partir de l'hydrolyse des groupes cyano dans les conditions de la réaction de sulfonation.

10. Procédé selon la revendication 1, dans lequel ladite extrusion est réalisée en pressant le gel macroréticulaire à travers une extrudeuse comprenant un ensemble de tubes parallèles d'une longueur de 1 mètre environ et d'un diamètre de 2 à 4 centimètres environ, et un système de découpe à une extrémité des tubes, pour former lesdites particules.

11. Produit stable obtenu selon l'une quelconque des revendications précédentes, qui est mélangé avec une terre pour agir de manière permanente comme régulateur d'humidité et promoteur de fertilité de celle-ci.
